# EUROPÄISCHE PATENTANMELDUNG

(11) **EP 1 378 876 A1**
(43) Veröffentlichungstag der Anmeldung: **07.01.2004**
(21) Anmeldenummer: 02014720.3
(22) Anmeldetag: 03.07.2002
(51) Int. Cl.: G07F 19/00

(54) **Verfahren zur elektrischen Bezahlung einer Ware oder Dienstleistung unter Nutzung eines Mobilfunknetzes und Anordnung zu dessen Durchführung**

(71) Anmelder: SIEMENS AKTIENGESELLSCHAFT, 80333 München (DE)
(72) Erfinder: Findling, Axel, 80636 München (DE); Glätzer, Matthias, 81369 München (DE); Vindeby, Per, 81739 München (DE)

(57) **Zusammenfassung**

Die Erfindung betrifft ein Verfahren zur elektronischen Bezahlung mindestens eines Kleinstbetrages für eine Ware oder Dienstleistung durch einen Kunden an einen Händler unter Nutzung eines Daten- und/oder Telekommunikationsnetzes und unter Einschaltung eines Abrechnungssystem-Servers, wobei für den Bezahlvorgang oder die Serie von Bezahlschritten ein eindeutiger Vorgangs-Identifikator generiert und mindestens bei einem ersten Bezahlschritt in einer Bestätigungsanfrage vom Abrechnungssystem-Server, zusammen mit einer Zahlbetragsinformation, an ein Kunden-Endgerät übermittelt wird,

## Beschreibung

Verfahren zur elektronischen Bezahlung einer Ware oder Dienstleistung unter Nutzung eines Mobilfunknetzes und Anordnung zu dessen Durchführung

Die Erfindung betrifft ein Verfahren zur elektronischen Bezahlung einer Ware oder Dienstleistung nach dem Oberbegriff des Anspruchs 1 sowie eine zur Durchführung dieses Verfahrens geeignete Anordnung.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Für die verschiedenen Situationen existieren die unterschiedlichsten Anforderungen an elektronischen Bezahlverfahren. Dies umfasst sowohl Bezahlverfahren über das Internet als auch mobile Bezahlverfahren auf Basis von z.B. SMS, WAP und USSD.

Im besonderen werden geeignete Verfahren für das sogenannte Micro-Payment benötigt. Dies sind Abrechnungen kleiner Beträge (typisch kleiner 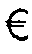 5,00), die in der Regel nicht kosteneffizient über vorhandene elektronische Bezahlverfahren, wie z.B. Lastschrift, abgewickelt werden können. Außerdem bestehen Micro-Payment-Vorgänge oft nicht aus einer einzelnen Transaktion (wie z.B. beim Einkauf in einem Web-Shop, bei dem ein "Warenkorb" gefüllt wird), sondern aus vielen einzelnen kleinen Transaktionen. Zukünftig werden immer mehr Dienste im Internet vergebührt, wie Web-Content, wobei die Kosten z.B. vom Volumen der übermittelten Daten abhängen oder von der Anzahl der geladenen Seiten. Ähnlich wie bei einem Telefongespräch fallen also kontinuierlich Kosten/Abbuchungen an. Bei der Vergebührung von Content sind die Kosten allerdings in der Regel nicht zeitabhängig, sondern abhängig vom Verhalten des Benutzers. Eine zeitabhängige Vergebührung ist jedoch im Prinzip auch möglich.

Beim Telefonieren muss ein Benutzer in der Regel eine Bezahlung nicht autorisieren. Es wird davon ausgegangen, dass er sobald er an seinem Telefon eine Nummer gewählt hat, automatisch damit einverstanden ist, dass der Telefonanbieter sein Konto belasten darf. Dies ist in der Regel auch kein Problem, da ein Vertrauensverhältnis und auch ein entsprechend gestaltetes Vertragsverhältnis zwischen dem Benutzer und dem Telefondienstanbieter besteht.

Bei e-commerce ist dies aber nicht immer der Fall. Ein Benutzer kann im Internet einen für ihn interessanten zufälligen Dienst, für dessen Benutzung er bezahlen muss, zufällig finden. Da in diesem Fall kein Vertrauensverhältnis existiert, will der Benutzer einer Bezahlung erst zustimmen, d.h. sie entweder bestätigen (z.B. mit OK) oder gar autorisieren (mit einer PIN). Bei kontinuierlichen Abbuchungen möchte er dies aber nicht bei jeder Abbuchung vornehmen. Einerseits ist dies für den Benutzer umständlich und andererseits bei einigen Diensten wie z.B. Streaming Audio/Video unakzeptabel, da in diesem Fall das Audio/Video für jede Abbuchung möglicherweise unterbrochen werden würde.

Das technische Problem besteht grundsätzlich darin, ein Verfahren zu entwickeln, welches obige Punkte befriedigt:
- Universalität: gleiches Grundprinzip für unterschiedliche Access-Methoden wie z.B. Web, SMS und WAP.
- Unterstützung von kontinuierlichen Abbuchungen, wobei der Benutzer flexibel, dienstspezifisch und unmittelbar bestimmen kann, ob und wann die nächste Bestätigung/Autorisierung erfolgen soll.
- Die Festlegung der nächsten Bestätigung/Autorisierung muss für den Händler geheim bleiben.
- Die Bezahlung muss für den Benutzer gegenüber dem Händler anonym erfolgen können.
- Der Ablauf muss möglichst einfach gestaltet sein.
- Der Ablauf muss so gestaltet sein, dass es bzgl. unterschiedlicher Angriffe sicher ist.

Mit diesem grundsätzlichen Problem beschäftigen sich u.a. die europäische Patentanmeldung 00 121 482.4 (veröffentlicht als EP 1 193 658 A1) sowie eine weitere frühere Patentanmeldung (betriebsinternes Zeichen 200201374) des Anmelders.

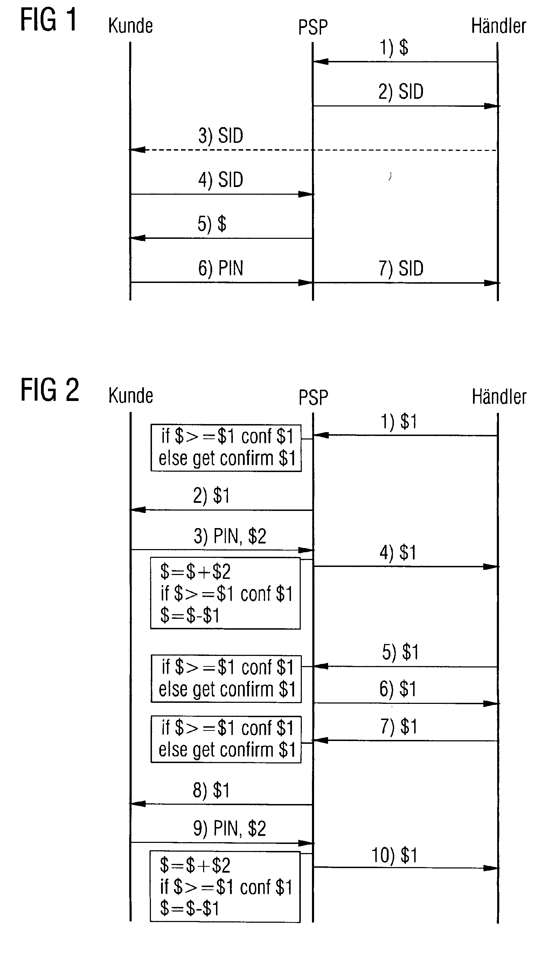

Die erstgenannte Druckschrift beschreibt, wie ein Geldsender einem Geldempfänger mittels einer Empfänger-ID (RID) einen elektronischen Geldbetrag anonym übermitteln kann - im folgenden wir diese jedoch als Session-ID (SID) bezeichnet (zwecks Vereinheitlichung der Beschreibung). Hiermit kann der Kunde gegenüber dem PSP (Payment Service Provider) wie auch Händler anonym bleiben. In Fig. 1 und der nachfolgenden Kurzbeschreibung ist das Verfahren vereinfacht dargestellt:

Der Händler übermittelt dem PSP den zu bezahlenden Geldbetrag (1) und erhält eine eindeutige Session-ID (SID) (2) zurück. Die SID übermittelt er dem Kunden z.B. mündlich bei einem POS (Point of Sale) (3). Der Kunde baut eine Verbindung zum PSP auf und übermittelt die SID (3), wodurch er gleichzeitig auch anhand seiner MSISDN identifiziert werden kann. Der PSP gibt den zugehörigen zu bezahlenden Betrag zurück (5) und der Kunde bestätigt die Bezahlung mit einer PIN (6). Die SID wird dem Händler als Zahlungsbestätigung mitgeteilt.

Die genannte ältere Anmeldung beschreibt das Verfahren des sogenannten Pre-confirm, das heißt, ein Kunde kann einen höheren (oder auch geringeren) Betrag vorausbestätigen als der Händler fordert. Somit können nachfolgende Abbuchungen vom Händler ohne die dauernde lästige Bestätigung durch den Kunden erfolgen. Da der Kunde selber den maximalen Betrag vorgibt, kann er die Bezahlung sehr flexibel selbst bestimmen. Erst wenn der vorausbestätigte Betrag aufgebraucht ist, muss er die Bezahlung wieder bestätigen.

Nachfolgend sowie in Fig. 2 wird eine Kurzbeschreibung dieses Verfahrens anhand seiner wesentlichen Schritte gegeben:

Der Händler will über den PSP vom Kunden einen Betrag $1 abbuchen (1). Der PSP prüft ob das preconfirm-Konto $ ausreichend ist. Wenn nein, muss der Kunde den Betrag mit einer PIN bestätigen (2,3). Zusätzlich kann er einen höheren Betrag bestätigen ($2) und das Pre-confirm-Konto wird entsprechend angepasst. Der Betrag $1 wird dem Händler bestätigt (4). Bei der nächsten Zahlungsaufforderung (5) reicht das Pre-confirm-Konto aus, so dass der Betrag sofort bestätigt werden kann (6). Diese Schritte wiederholen sich bis das Pre-confirm-Konto nicht mehr ausreicht und der Benutzer wieder bestätigen muss.

Das oben erstgenannte Verfahren ist sehr stark auf reale POS, beispielsweise Ladengeschäfte oder Verkaufsautomaten, und Prepaid-Konten ausgerichtet. Dabei kann das Grundprinzip mit SID relativ einfach erweitert werden um auch andere Szenarien zu unterstützen (z.B. Web, WAP, SMS). Weiter kann auf Basis der SID auch das Pre-confirm realisiert werden. Das Verfahren berücksichtig nur den Fall, wo die Server von Mobilfunkbetreibern betrieben werden. Das zweite oben erwähnte Verfahren bedarf hinsichtlich der genauen Realisierung noch bestimmter Konkretisierungen.

Der Erfindung liegt daher die Aufgabe der Bereitstellung eines praxisnah ausgearbeiteten und besonders auf die Erfordernisse des Micro-Payment zugeschnittenen elektronischen Bezahlverfahrens zugrunde. Weiter umfasst die Aufgabe die Bereitstellung einer entsprechenden Anordnung.

Diese Aufgabe wird in ihrem Verfahrensaspekt gelöst durch ein Verfahren mit den Merkmalen des Anspruchs 1 und in ihrem Vorrichtungsaspekt durch eine Anordnung mit den Merkmalen des Anspruchs 16.

Die Erfindung löst die oben genannten technischen Probleme aufgrund folgender Prämissen:
- Auf Basis einer Session-ID (SID) wird sichergestellt, dass der Kunde gegenüber dem Händler (Dienstanbieter) anonym bleiben kann (aber nicht muss).
- Weiter ermöglicht die SID, dass der Kunde dem Händler erlauben kann kontinuierliche Abbuchungen vorzunehmen ohne dass der Kunde die Bezahlung bestätigen/autorisieren muss.
- Das Limit der maximalen gesammelten Abbuchung kann vom Benutzer dienstspezifisch und flexibel gesetzt werden.
- Das Verfahren unterstützt die unterschiedlichsten Access-Verfahren für den Kunden wie z.B. WEB, WAP, SMS und Voice/DTMF. Es kann sowohl im Internet wie auch an POS (Point of Sales) eingesetzt werden. Die Anbindung zwischen Händler und PSP wird typischer Weise über Standard-Datenleitungen hergestellt.

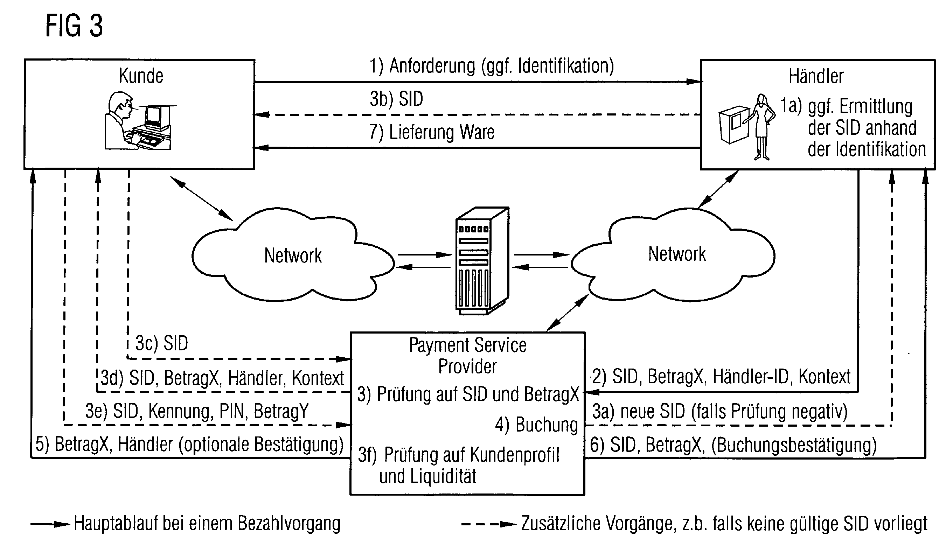

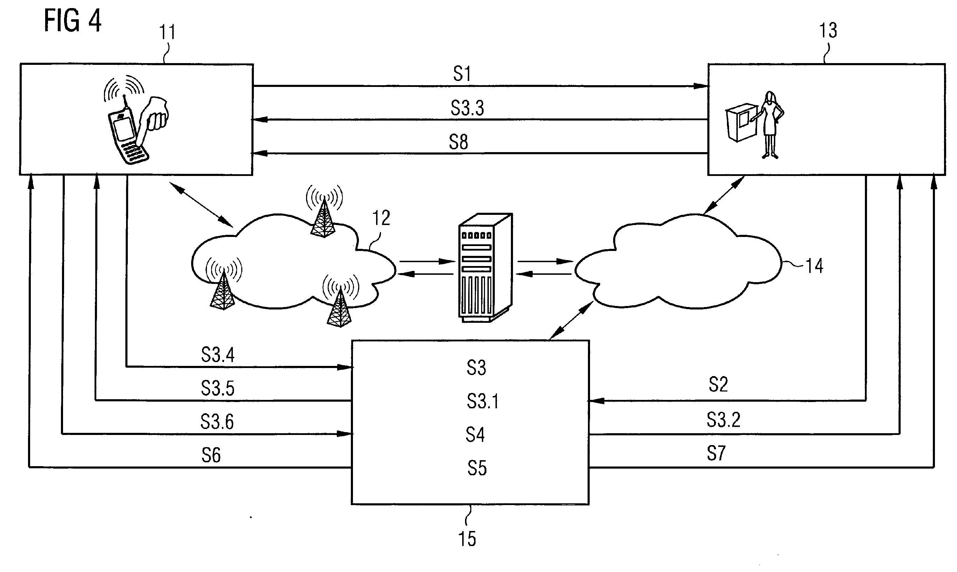

Das Verfahren umfasst in einer zweckmäßigen Verfahrensführung die nachfolgenden Schritte; vgl. dazu Fig. 3 sowie die in den Figuren 4 bis 7 gegebene Darstellung bevorzugter Ausführungsbeispiele und die entsprechenden Beschreibungsteile weiter unten.
1) Kunde will einen Service von einem Händler benutzen, z.B. WAP-Content abfragen, in einem WEB-Shop oder an einem POS für eine Ware bezahlen.
   1a) Konnte der Händler den Kunden identifizieren und eine dem Kunden zugeordnete SID ermitteln, so kann er diese in Schritt 2) mitgeben.
2) Der Händler sendet eine Abbuchungsanfrage mit einer SID (falls vorhanden), den zu bezahlenden Betrag (BetragX), die Händler-ID sowie einen Kontext (was wurde gekauft) an den PSP.
3) Hier gibt es folgende Fallunterscheidungen:
   - Wurde bei 2) keine SID mitgegeben, so gibt der PSP eine eindeutige SID an den Händler zurück. Anschließend folgen die Schritte 3a bis 3f.
   - Wurde bei 2) eine SID mitgegeben, mit der jedoch keine Abbuchung möglich war (z.B. weil der Kunde die Bezahlung erst autorisieren muss), so wird die SID oder alternativ eine neue SID zurückgegeben. Anschließend folgen die Schritte 3a bis 3f.
   - Wurde bei 2) eine SID übermittelt, bei der eine Abbuchung stattfinden konnte, so wird dem Händler die Abbuchung bestätigt. Anschließend folgt Schritt 4.

   3a) Falls bei 3) die Prüfung negativ war (d.h. keine Abbuchung möglich), so teilt der PSP dem Händler eine SID mit. 3b) Der Händler teilt dem Kunden die SID mit. Bei WAP and WEP kann dies als Parameter in einem Redirect vom Kunden zum PSP geschehen, bei SMS kann der Händler dem Kunden eine SMS mit der enthaltene SID zuschicken. An einem POS kann die SID auch mündlich übermittelt werden.
   3c) Der Kunde leitet die SID an den PSP weiter. Bei WEB und WAP kann dies automatisch geschehen, d.h., der Kunden muss hierfür keine Eingaben machen (Redirect). Bei SMS kann er die SMS vom Händler mit der SID an den PSP weiterleiten. Bei Voice/DTMF muss der Kunde i.d.R. den PSP anrufen und die SID via DTMF übermitteln.
   3d) Der PSP teilt dem Kunden den geforderten Betrag (BetragX), den Händlernamen sowie den Kontext z.B. via WEB, WAP, SMS oder Voice (Sprachansage) mit.
   3e) Der Kunde identifiziert sich, z.B. automatisch via seiner MSISDN, oder Eingabe seiner Kennung. Darüber hinaus kann der Kunde den geforderten Betrag (BetragX) verändern (BetragY), z.B. erhöhen für eine Vorausbestätigung nachfolgender Zahlungen. Weiter kann er die Bezahlung bestätigen/autorisieren (z.B. PIN).
   3f) Prüfung auf Kundenprofil und Liquidität.
4) Der PSP führt nun die notwendigen Überprüfungen der Bezahlung durch.
5) Optional kann der PSP dem Kunden die Bezahlung (BetragX) bestätigen (z.B. per SMS).
6) Der PSP bestätigt die Buchung des Betrags an den Händler.
7) Der Händler übermittelt die Ware an den Kunden.

Bei verbindungsbezogenen Abläufen mit z.B. WAP und WEB findet der Wechsel der Kommunikationsbeziehung von zuerst zwischen Kunde<->Händler zu Kunde<->PSP typisch auf Basis Verbindungs-Redirect statt. Damit der Kunde beim Händler den gewünschten Dienst nach der Bezahlung wieder nutzen kann, findet ein Redirect vom PSP zurück zum Händler statt. Diese Redirects sind nur implementierungsspezifisch und somit nicht im Ablauf dargestellt.

Nach einer Vorausbestätigung eines ausreichenden Betrags besteht eine Abbuchung nur aus den Schritten 2), 3), 4) und 6) und kann somit sehr effizient abgewickelt werden. Das Vorausbestätigen eines Betrags muss nicht in unmittelbarem Zusammenhang eines Kaufs stehen. Der Kunde kann z.B. zu einer SID einen ausreichend großen Betrag vorausbestätigen um z.B. bei Parkautomaten zu bezahlen. Wenn sich der Händler die Zuordnung zwischen Kunde und SID merkt, so können für alle zukünftigen Bezahlungen die Schritte 3a bis 3f entfallen. Die Erkennung des Kunden kann z.B. auf Basis der MSISDN einer SMS oder einer Kennung bei einem Login stattfinden. Wichtig dabei ist, dass die Benutzererkennung beim Händler unabhängig von der Benutzerkennung beim PSP ist. Es bestehen somit keine Abhängigkeiten und der Händler muss die Benutzerkennung des Kunden beim PSP nicht kennen.

Ein Kunde hat jederzeit die Möglichkeit, sich beim PSP eine Liste seiner gültigen SIDs anzeigen lassen. Zusätzlich zur SID können auch die zugehörigen Daten, wie der noch verfügbare Betrag und der zugehörige Händler angezeigt werden. Ausgewählte SIDs (beim PSP) können auch gelöscht werden, z.B. via WEB, WAP und SMS. Nach einem Löschen der SID kann der Händler keine Abbuchungen vornehmen ohne dass der Kunde involviert wird. Um eine Abbuchung wieder vorzunehmen, muss dann der gesamte Ablauf durchgeführt werden (z.B. SID anfordern und Bezahlung bestätigen).

Der PSP muss nicht die wirklichen Konten führen und das Geld des Kunden und Händler verwalten. Der PSP kann z.B. Schnittstellen zu einem Clearing House haben, welches das Clearing und Settlement der Konten durchführt.

Folgende Vorteile hat das Verfahren:
- Das Grundprinzip des Verfahrens ist identisch für die unterschiedlichen Access-Methoden (z.B. Web WAP, SMS, etc.). Dies vereinfacht die Realisierung des Paymentsystems, die Benutzung des Verfahrens für Händler und Kunden ohne Einschränkung der Flexibilität.
- Das Verfahren unterstützt sowohl einzelne Abbuchungen wie auch kontinuierliche Abbuchungen. Letzteres ist vor allem wichtig bei Content-Charging, wo die Vergebührung z.B. volumenbasiert ("Pay per Click") oder auch zeitbasiert stattfindet.
- Kostenkontrolle: Der Kunde kann dienstspezifisch Beträge vorausbestätigen und somit das sonst lästige Bestätigen/Autorisieren der Buchungen vermeiden.
- Bei vorausbestätigten Beträgen verläuft die Abbuchung sehr schnell: In einem einfachen Fall muss der Kunde dem Händler nur eine SMS schicken, um z.B. ein Getränk aus einem Getränkeautomaten zu erhalten.
- Hohe Sicherheit: Der Kunde muss dem Händler keine vertraulichen bzw. zahlungsrelevanten Daten geben wie z.B. PIN oder Kontonummer.
- Der Kunde kann gegenüber dem Händler anonym sein.

Weitere Aspekte der Erfindung ergeben sich aus den Unteransprüchen. Es wird ausdrücklich darauf hingewiesen, dass in den abhängigen Verfahrensansprüchen angegebene vorteilhafte Ausgestaltungen des Verfahrens sämtlich auch als Ausgestaltungen der zur Durchführung des Verfahrens geeigneten Anordnung, sei es in hardware- oder softwaremäßiger Realisierung, zu verstehen sind. Nachfolgend wird die Erfindung anhand von Ausführungsbeispielen beschrieben, die anhand von Abbildungen näher erläutert werden. Hierbei zeigen:
Fig. 1 eine schematische Darstellung zur Verdeutlichung des Ablaufes eines bekannten elektronischen Zahlverfahrens,
Fig. 2 eine schematische Darstellung eines elektronischen Bezahlverfahrens, welches Gegenstand einer früheren Patentanmeldung ist,
Fig. 3 ein Blockschaltbild mit Kennzeichnungen von Verfahrensschritten zur zusammenhängenden Verdeutlichung wesentlicher Gedanken der Erfindung,
Fig. 4 ein Blockschaltbild einer ersten Ausführungsform der Erfindung,
Fig. 5 ein Blockschaltbild einer weiteren Ausführungsform der Erfindung,
Fig. 6 ein Blockschaltbild einer dritten Ausführungsform der Erfindung und
Fig. 7 ein Blockschaltbild einer weiteren Ausführungsform der Erfindung.

Zu Fig. 1 und 2 wird auf die Erläuterung des Standes der Technik in der Beschreibungseinleitung hingewiesen; zu Fig. 3 auf die Erläuterung einer zweckmäßigen Verfahrensführung weiter oben.

Fig. 4 stellt einen ersten Buchungsprozess für das erstmalige Abrufen eines kostenpflichtiges WAP-Contents durch den Käufers bei einem Anbieter dar. In Schritt S1 ergeht vom WAP-fähigen Endgerät (z.B. Mobilfunktelefon) 11 des Käufers eine Anfrage über ein GSM-Telekommunikationsnetz 12 an den Server 13 eines Anbieters. Der Verkäufer übermittel in Schritt S2 die Transaktionsdaten, die aus der Kennung des Verkäufers, der Bezeichnung und des Rechungsbetrages in Höhe von 1 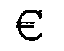 für das WAP-Contents bestehen, über ein Datennetz 14 an den Server 15 eines Payment Service Providers (PSP).

Da nach Überprüfung der Transaktionsdaten in Schritt S3 keine dem Käufer zugeordnete Session-ID (SID) ermittelt wurde, wird nun auf dem Server 15 des PSP durch Schritt S3.1 eine eindeutige SID erzeugt und mit S3.2 zum Server 13 des Anbieters übertragen, wo diese gespeichert wird. Diese wird im Schritt S3.3 als Parameter in der URL eines WAP-Redirect an das Mobiltelefon 11 des Käufers gesendet, wobei die SID automatisch im Rahmen des WAP-Redirect in Schritt S3.4 an den Server 15 des PSP übermittelt wird. Nachfolgend wird in S3.5 vom Server 15 des PSP die Kennung des Verkäufers, die Bezeichnung und der Rechungsbetrag von 1 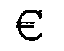 des WAP-Contents an das Mobilfunktelefon 11 des Käufers übermittelt. In Schritt S3.6 findet eine Identifizierung des Käufers anhand der bekannten MSISDN des Mobilfunktelefons durch eine WAP-GW-Abfrage und weiterhin eine Autorisierung eines Guthabenbetrages von 3 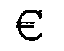 mit einer PIN statt.

Auf dem Server 15 des PSP wird im Schritt S4 der Guthabenbetrag dem zur SID zugehörigen Transaktionskonto zugeordnet sowie der Rechnungsbetrag auf dem Transaktionskonto verbucht, und nach Überprüfung des Käuferprofils in S5 wird in S6 eine Buchungsbestätigung, der den Rechnungsbetrag von 1 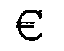 und die Händlerkennung umfasst, zum Mobilfunktelefon 11 des Käufers gesendet. Nach der Übermittlung der Buchungsbestätigung vom Server 15 des PSP an den Server 13 des Anbieters in Form von SID und Rechnungsbetrag für den WAP-Content in S7, erfolgt in Schritt S8 die Freigabe der Übermittlung des WAP-Contents zum Mobilfunktelefon 11 des Käufers.

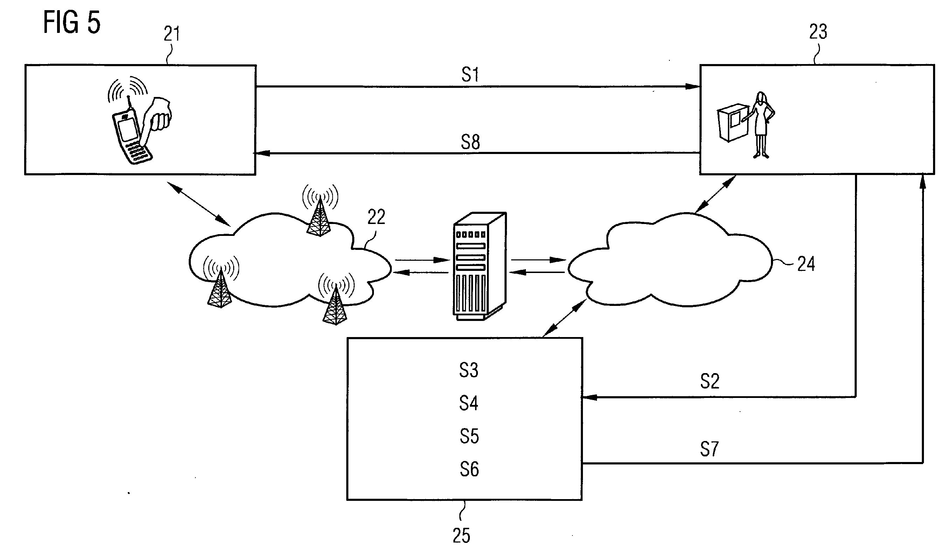

Fig. 5 beschreibt einen Buchungsprozess für einen kostenpflichtigen WAP-Content, wie es sich an das Beispiel aus Fig. 4 anschließen könnte. In Schritt S1 ergeht vom Mobilfunktelefon 21 des Käufers eine weitere Anfrage an den Server 23 des Anbieters, der in Schritt S2 die Transaktionsdaten, bestehend aus der Kennung des Verkäufers, der Bezeichnung und des Rechnungsbetrages in Höhe von 1 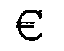 für den WAP-Content sowie SID, an den Server 25 des PSP. Nach positiver Überprüfung der Transaktionsdaten bzw. der SID, des Guthabenbetrags und des Kundenprofils in den Schritten S3 bis S5, wird nun nachfolgend in Schritt S6 die Buchung des Rechnungsbetrages zum Transaktionskonto auf dem Server 25 des PSP vorgenommen. Nach dem Senden der Buchungsbestätigung S7 an den Server 23 des Anbieters erfolgt dann in Schritt S8 die Freigabe zur Übermittlung des WAP-Contents an das Mobilfunktelefon 21 des Käufers.

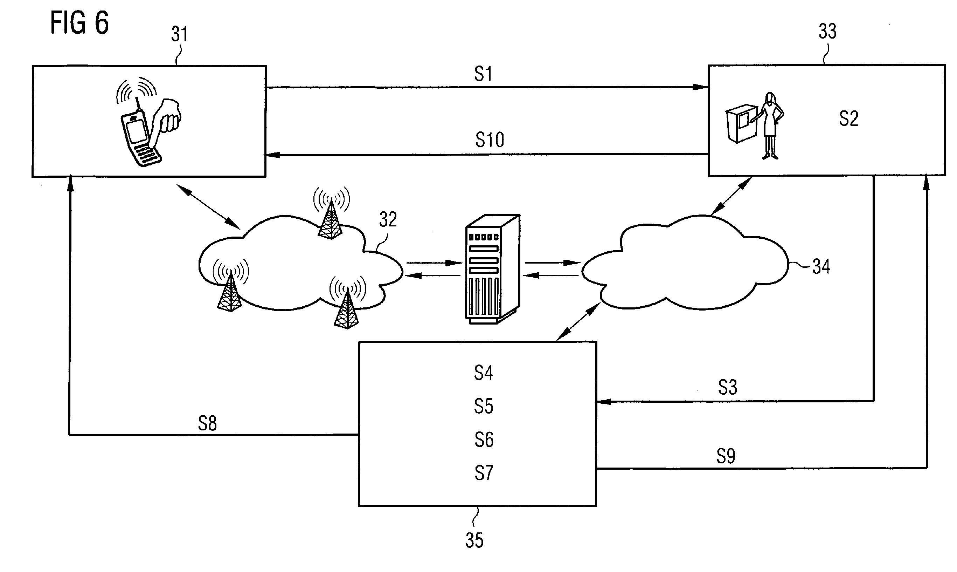

Fig. 6 stellt die Nutzung eines kostenpflichtigen Dienstes auf Basis von SMS dar, bei dem in Schritt S1 vom Mobilfunktelefon 31 des Käufers über ein Mobilfunknetz 32 eine Anforderung an den Server 33 des Verkäufers ergeht. In Schritt S2 wird an Hand der MSISDN/Mobilfunknummer die zum Käufer zugehörige SID ermittelt und in S3 zusammen mit den übrigen Transaktionsdaten (Verkäufer-Kennung, Bezeichnung und Rechnungsbetrag von 1 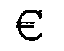 ) über ein Datennetz 34 an den Server 35 des PSP übermittelt. Nach positiv verlaufener Überprüfung der Transaktionsdaten bzw. der SID, des Guthabenbetrags und des Kundenprofils in den Schritten S4 bis S6 erfolgt in S7 die Verbuchung des Rechnungsbetrages. Auf Grund einer Anweisung, die im Kundenprofil hinterlegt ist, ergeht im Schritt S8 vom Server 35 des PSP eine Bestätigung der Buchung der Rechnungsbetrages von 1 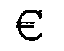 zum Mobilfunktelefon 31 des Käufers. In Schritt S9 wird die Buchungsbestätigung an den Server 33 des Verkäufers ermittelt, wo dann mit Schritt S10 der Verkäufer die kostenpflichtige SMS an den Kunden übermittelt.

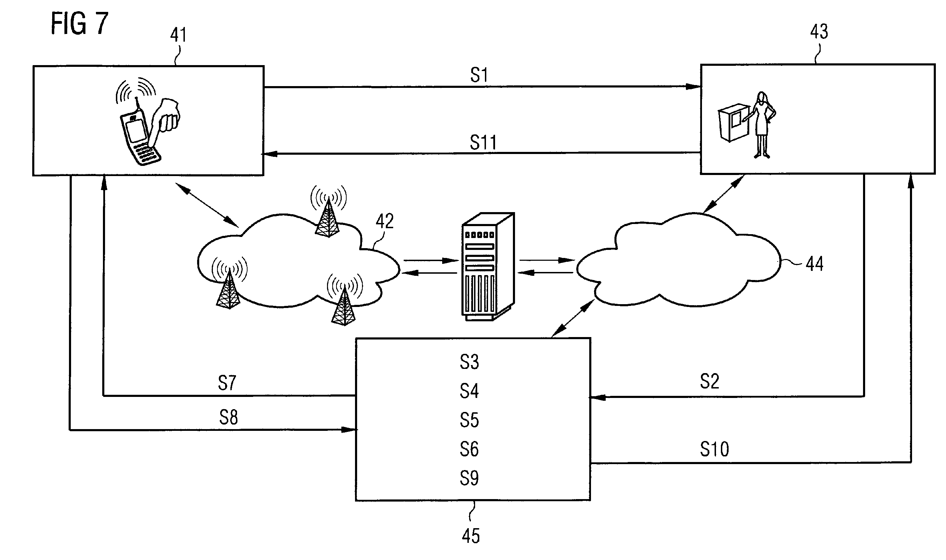

Fig. 7 stellt ein weiteres Beispiel auf Basis von SMS dar, wobei die Schritte S1 (Anforderung eines kostenpflichtigen Dienstes) bis S6 (Überprüfung des Kundenprofils) analog zur Fig. 5 verlaufen. Beim vorliegenden Fall ist im Kundenprofil eine Autorisierung der Buchung hinterlegt, so dass in Schritt S7 vom Server 45 des PSP die Transaktionsdaten zum Mobilfunktelefon 41 des Käufers gesendet werden. In Schritt S8 wird die Buchung durch Übermittlung des Rechnungsbetrages, SID und PIN an den Server 45 des PSP autorisiert, die dann in S9 vorgenommen wird. Nach Übermittlung der Buchungsbestätigung an den Server 43 des Verkäufers in Schritt S10, erfolgt mit S11 die Übermittlung der kostenpflichtigen SMS vom Verkäufer an den Kunden.

Die Ausführung der Erfindung ist nicht auf die oben dargestellten beispielhaften Beschreibungen beschränkt, sondern umfasst eine Vielzahl von Abwandlungen, die im Rahmen fachgemäßen Handelns liegen.

## Patentansprüche

1. Verfahren zur elektronischen Bezahlung mindestens eines Kleinstbetrages, insbesondere zur Ausführung einer Serie von Bezahlschritten mit jeweils einem Kleinstbetrag, für eine Ware oder Dienstleistung durch einen Kunden an einen Händler unter Nutzung eines Daten- und/oder Telekommunikationsnetzes und unter Einschaltung eines Abrechnungssystem-Servers, wobei
- für den Bezahlvorgang oder die Serie von Bezahlschritten ein eindeutiger Vorgangs-Identifikator generiert und mindestens bei einem ersten Bezahlschritt in einer Bestätigungsanfrage vom Abrechnungssystem-Server, zusammen mit einer Zahlbetragsinformation, an ein Kunden-Endgerät übermittelt wird,
- der Kunde durch Übermittlung einer Bestätigungsnachricht von einem Kunden-Endgerät über das Daten- bzw. Telekommunikationsnetz an den Abrechnungssystem-Server einen Guthaben- bzw. Kredit-Teilbetrag in Höhe des Zahlbetrages in Zuordnung zu dem Vorgangs-Identifikator zur Zahlung freigibt,
- auf dem Abrechnungssystem-Server ein Vergleich eines beim Abrechnungssystem-Server registrierten und von diesem aus elektronisch verwaltbaren Guthaben- bzw. Kredit-Teilbetrages des Kunden mit dem von diesem freigegebenen Zahlbetrag ausgeführt wird und
- im Ansprechen auf die Feststellung eines den freigegebenen Zahlbetrag übersteigenden Guthabenbetrages durch den Abrechnungssystem-Server in Reaktion auf die Bestätigungsnachricht eine Abbuchung des freigegebenen Zahlbetrages oder eines bis zu diesem Zeitpunkt zu zahlenden Teilbetrages hiervon getriggert und eine erste Ausführungsnachricht über die erfolgte Abbuchung an ein Händler-Endgerät gesandt wird.

2. Verfahren nach Anspruch 1,
**dadurch gekennzeichnet, dass**
der Vorgangs-Identifikator in Zuordnung zu einem Kunden-Identifikator durch den Abrechnungssystem-Server erzeugt und vorab, insbesondere in Reaktion auf eine vom Händler-Endgerät aus übermittelte Anforderungsnachricht, an den Händler übersandt wird.

3. Verfahren nach Anspruch 2,
**dadurch gekennzeichnet, dass**
die Übersendung des Vorgangs-Identifikators auf elektronischem Wege in einer Identifikator-Mitteilung vom Abrechnungssystem-Server an das Händler-Endgerät erfolgt.

4. Verfahren nach einem der vorangehenden Ansprüche,
**dadurch gekennzeichnet, dass**
ein zweiter Bezahlschritt und etwaige weitere Schritte einer zusammenhängenden Serie von Bezahlschritten jeweils durch
- Übermittlung eines schrittbezogenen Zahlbetrages in Zuordnung zum Vorgangs-Identifikator an den Abrechnungssystem-Server,
- Prüfung des schrittbezogenen Zahlbetrages in Relation zu einem vom freigegebenen Zahlbetrag verbleibenden Rest-Zahlbetrag ausgeführt und
- eine im Ansprechen auf die Feststellung eines den Rest-Zahlbetrag unterschreitenden schrittbezogenen Zahlbetrages vorgenommene Abbuchung und Absendung einer weiteren Ausführungsnachricht an das Händler-Endgerät ausgeführt wird.

5. Verfahren nach Anspruch 4,
**dadurch gekennzeichnet, dass**
bei dem zweiten Bezahlschritt oder weiteren Schritten im Ergebnis der Feststellung eines den freigegebenen Rest-Zahlbetrag übersteigenden schrittbezogenen Zahlbetrages durch den Abrechnungssystem-Server an ein Kunden-Endgerät eine Bestätigungsanfrage mit dem ursprünglichen oder einem neuen Vorgangs-Identifikator und eine Zahlbetragsinformation mit einem mindestens die Differenz zwischen schrittbezogenem Zahlbetrag und Rest-Zahlbetrag abdeckenden Zahlbetrag gesandt und eine Abbuchung des schrittbezogenen Zahlbetrages erst nach Empfang einer entsprechenden Bestätigungsnachricht vom Kunden-Endgerät getriggert wird.

6. Verfahren nach Anspruch 5,
**dadurch gekennzeichnet, dass**
der in der Bestätigungsanfrage zur Bestätigung angegebene Zahlbetrag deutlich größer als die Differenz zwischen dem schrittbezogenen Zahlbetrag und dem Rest-Zahlbetrag ist derart, dass im Ansprechen auf eine Bestätigungsnachricht für diesen Zahlbetrag ein neuer Rest-Zahlbetrag für mehrere folgende Bezahlschritte beim Abrechnungssystem-Server freigegeben ist.

7. Verfahren nach einem der vorangehenden Ansprüche,
**dadurch gekennzeichnet, dass**
jede Nachricht vom Händler-Endgerät an den Abrechnungssystem-Server einen Händler-Identifikator sowie einen die Ware oder Dienstleistung kennzeichnenden Kontext-Datensatz umfasst.

8. Verfahren nach einem der vorangehenden Ansprüche,
**dadurch gekennzeichnet, dass**
der Vorgangs-Identifikator an das Händler-Endgerät per E-Mail oder SMS übermittelt wird.

9. Verfahren nach einem der Ansprüche 1 bis 7,
**dadurch gekennzeichnet, dass**
dem Kunden der Vorgangs-Identifikator an einem Point-of-Sale außerhalb des Daten- bzw. Telekommunikationsnetzes, insbesondere mündlich oder in einer Beschriftung, mitgeteilt wird.

10. Verfahren nach einem der vorangehenden Ansprüche,
**dadurch gekennzeichnet, dass**
die Bestätigungsanfrage vom Abrechnungssystem-Server an das Kunden-Endgerät über E-Mail, WAP-Push, per SMS oder als synthetische Sprachnachricht übermittelt wird.

11. Verfahren nach einem der vorangehenden Ansprüche,
**dadurch gekennzeichnet, dass**
die Bestätigungsanfrage vom Abrechnungssystem-Server an das Kunden-Endgerät einen Händlernamen und einen die Ware oder Dienstleistung kennzeichnenden Kontext-Datensatz umfasst.

12. Verfahren nach einem der vorangehenden Ansprüche,
**dadurch gekennzeichnet, dass**
die Bestätigungsnachricht vom Kunden-Endgerät an den Abrechnungssystem-Server per E-Mail-Redirect, WAP-Redirect oder SMS-Redirect, insbesondere ohne zusätzliche Eingabe seitens des Kunden, gesandt wird.

13. Verfahren nach einem der Ansprüche 1 bis 11,
**dadurch gekennzeichnet, dass**
die Bestätigungsnachricht vom Kunden-Endgerät an den Abrechnungssystem-Server per Sprachnachricht unter nachgeschalteter Spracherkennung oder per DTMF gesandt wird.

14. Verfahren nach einem der vorangehenden Ansprüche,
**dadurch gekennzeichnet, dass**
die Bestätigungsnachricht vom Kunden-Endgerät an den Abrechnungssystem-Server einen automatisch erzeugten oder vom Kunden eingegebenen Kunden-Identifikator und optional einen Authentisierungscode, insbesondere eine PIN oder ein Passwort, umfasst.

15. Verfahren nach einem der vorangehenden Ansprüche,
**dadurch gekennzeichnet, dass**
der Abrechnungssystem-Server neben der ersten Ausführungsnachricht an das Händler-Endgerät eine zweite Ausführungsnachricht an das Kunden-Endgerät versendet.

16. Anordnung zur Durchführung des Verfahrens nach einem der vorangehenden Ansprüche, mit
- einem Abrechnungssystem-Server eines Abrechnungssystembetreibers,
- einem an ein Daten- und/oder Telekommunikationsnetz angeschlossenen und über dieses mit dem Abrechnungssystem-Server verbindbaren Kunden-Endgerät und
- einem ebenfalls an das Daten- und/oder Telekommunikationsnetz oder ein weiteres Kommunikationsnetz angeschlossenen und über dieses mit dem Abrechnungssystem-Server verbindbaren Händler-Endgerät,
wobei der Abrechnungssystem-Server Mittel zur Erzeugung und Absendung einer Bestätigungsanfrage an das Kunden-Endgerät, Mittel zum Empfang einer Bestätigungsnachricht vom Kunden-Endgerät und zur Extraktion mindestens des Vorgangs-Identifikators und eines freigegebenen Zahlbetrages aus dieser, Speichermittel zur kundenbezogenen Speicherung des Guthabenbetrages und zur vorgangsbezogenen Speicherung des freigegebenen Zahlbetrages, Vergleichermittel zum Vergleich des Guthabenbetrages mit dem Zahlbetrag sowie mit den Vergleichermitteln verbundene Steuer- und Sendemittel zur Triggerung der Abbuchung und zum Absenden der Ausführungsnachricht an das Händler-Endgerät aufweist.

17. Anordnung nach Anspruch 16,
**dadurch gekennzeichnet, dass**
das Kunden-Endgerät als Mobilfunk-Endgerät ausgebildet ist und das Daten- und/oder Telekommunikationsnetz ein Mobilfunknetz aufweist und dem Abrechnungssystem-Server Mobilfunk-Sende-/Empfangsmittel zur bidirektionalen Mobilfunkkommunikation mit dem Kunden-Endgerät zugeordnet sind.

18. Anordnung nach Anspruch 16 oder 17,
**dadurch gekennzeichnet, dass**
der Abrechnungssystem-Server Erzeugermittel zur Erzeugung des Vorgangs-Identifikators und mit diesen verbundene Sendemittel zu dessen Übersendung an das Händler-Endgerät aufweist.

19. Anordnung nach einem der Ansprüche 16 bis 18,
**dadurch gekennzeichnet, dass**
der Abrechnungssystem-Server weiterhin Berechnungsmittel zur Berechnung des Rest-Zahlbetrages aus einem gespeicherten freigegebenen Zahlbetrag und mindestens einem schrittbezogenen Zahlbetrag und mit den Berechnungsmitteln verbundene Speichermittel zur Speicherung des Rest-Zahlbetrages in Ersetzung des freigegebenen Zahlbetrages als Eingangsdatum für die Vergleichermittel aufweist.

20. Anordnung nach einem der Ansprüche 16 bis 19,
**dadurch gekennzeichnet, dass**
der Abrechnungssystem-Server Erkennungs- und Speichermittel zur Extraktion eines Händler-Identifikators und/oder Kunden-Identifikators aus Nachrichten vom Händler-Endgerät bzw. Kunden-Endgerät und zu dessen bzw. deren Speicherung sowie Adressierungsmittel zur Adressierung der Bestätigungsanfrage und/oder Ausführungsnachricht und wahlweise weiterer Nachrichten an das Kunden-Endgerät bzw. Händler-Endgerät anhand des gespeicherten Händler-Identifikators bzw. Kunden-Identifikators aufweist.
